# EUROPEAN PATENT SPECIFICATION

(11) **EP 2 703 539 B1**
(45) Date of publication and mention of the grant of the patent: **18.03.2020**
(21) Application number: 12182732.3
(22) Date of filing: 03.09.2012
(51) Int. Cl.: D06F 37/30, D06F 58/20, H02P 1/26, H02P 1/44, H02P 25/04

(54) **A method for controlling an asynchronous motor of a laundry treating machine and a laundry treating machine**
Verfahren zur Steuerung eines Asynchronmotors einer Wäschebehandlungsmaschine und Wäschebehandlungsmaschine
Procédé pour commander le moteur asynchrone d'une machine de traitement du linge et machine de traitement de linge

(43) Date of publication of application: 05.03.2014
(73) Proprietor: Electrolux Home Products Corporation N.V., 1130 Brussels (BE)
(72) Inventor: Driussi, Paolo, 33080 Porcia (PN) (IT); Furlan, Luca, 33080 Porcia (PN) (IT); Pasut, Fabio, 33080 Porcia (PN) (IT); Ragogna, Roberto, 33080 Porcia (PN) (IT)
(74) Representative: Electrolux Group Patents

(56) References cited:
- EP-A1- 0 752 752
- EP-A1- 2 392 722
- EP-B1- 1 666 660
- FR-A1- 2 486 728

## Description

The present invention relates to a method for controlling an asynchronous motor of a laundry treating machine. Further, the present invention relates to a laundry treating machine with an asynchronous motor.

The asynchronous motor in the laundry treating machine is provided for driving a laundry drum and/or air stream fan. During working operations, such asynchronous motor can operate at power supply voltages that are lower than the voltage normally supplied by an electrical power net supply into which the laundry treating machine is plugged. Said lower power supply voltages may be below 205 V. However, if a full amount of laundry is inside the laundry drum, and especially if such laundry is wet, then the asynchronous motor driving the laundry drum can accidently stall.

EP 1 666 660 B1 discloses an asynchronous motor for a laundry treating machine. A permanent first capacitor and a switchable second capacitor are interconnected between two separate coils of the motor. The capacitors act as phasing capacitors. The second capacitor is switched on in order to support the start of the motor. When the motor is running, the second capacitor is disconnected in order to reduce the energy consumption. The second capacitor increases the torque of the motor. The activation and deactivation of the second capacitor is controlled by the time. However, the time control is too rough and may supply the increased torque for the motor even when said increased torque is not required anymore, thereby increasing the overall electrical power consumption.

EP 2 392 722 A1 discloses an asynchronous motor for a heat pump system of a laundry dryer. The motor is provided for driving a compressor of the heat pump system. A permanent first capacitor and a switchable second capacitor acting as phasing capacitors are interconnected between two separate coils of the motor. The second capacitor is switched on and off in dependence of the torque transmitted by the motor or by the power absorbed by the compressor. This kind of control, however, requires either a complex arrangement for directly detecting torque supplied by the motor or the knowledge of the characteristic curve of the electric motor installed in the machine. In case of substitution of the motor with one having different characteristics, also the unit controlling the motor operations has to be reprogrammed, which is quite laborious.

EP 0 752 752 A1 discloses to control an asynchronous motor for a domestic appliance based on a current measurement. A mains switch and a switch for connecting/disconnecting two capacitors in parallel are driven. EP 0 752 752 is silent about which current has to be measured and how to drive each of said switches based on such current measurement to perform a motor duty cycle.

It is an object of the present invention to provide an improved method for controlling an asynchronous motor of a laundry treating machine and a corresponding laundry treating machine.

The object of the present invention is achieved by the method according to claim 1.

The present invention relates to a method for controlling an asynchronous motor of a laundry treating machine, said asynchronous motor includes a main coil and an auxiliary coil permanently interconnected via a first capacitor and switchably interconnected via a second capacitor by means of a switch, wherein the method comprises the steps of:
- detecting a first parameter of the asynchronous motor, wherein the first parameter is selected among the voltage, current, phase or rotation speed of said asynchronous motor, and
- controlling the ON and/or OFF state of the switch on the basis of the first parameter of the asynchronous motor.

The main idea of the present invention is that the modifycation of the state of a switch for altering the capacity of a capacitor device arranged between a main coil and an auxiliary coil of an asynchronous motor depends directly on one or more electric parameters of the asynchronous motor. A modification of the capacity of said capacitor device increases the torque of the asynchronous motor in critical situations by a safe way.

According to a preferred embodiment of the present invention the control of the ON and/or OFF state of the switch depends on a second parameter of the asynchronous motor, wherein the second parameter is different from the first parameter and is selected among the voltage, current, phase or rotation speed of said asynchronous motor or a further parameter depending thereof.

For example, the further parameter depending on the voltage, current, phase or rotation speed of the asynchronous motor is the power absorbed or the torque supplied by said asynchronous motor.

In particular, a predetermined lower threshold value and a predetermined upper threshold value are defined for controlling the ON and/or OFF state of the switch.

Preferably, the switch is switched ON, if the first and/or the second parameter of the asynchronous motor fall below the lower threshold value.

In a similar way, the switch is switched OFF, if the first and/or the second parameter of the asynchronous motor exceed the upper threshold value.

Further, a predetermined time interval is defined, so that the switch is switched ON, after the first and/or the second parameter of the asynchronous motor have remained permanently below the lower threshold value during said time interval.

In the same way, a further predetermined time interval is defined, so that the switch is switched OFF, after the first and/or the second parameter of the asynchronous motor have remained permanently above the upper threshold value during said time interval.

Further, the state of the switch is preferably changed if a predetermined condition of the first and/or the second parameter occurs for a predetermined number of times.

Moreover, the switch is switched OFF, if a further condition is fulfilled, wherein said further condition relates to at least a third parameter.

For example, the at least one third parameter is the humidity of laundry, the temperature of drying air or the temperature of a refrigerant in a heat pump system.

The object of the present invention is further achieved by the laundry treating machine according to claim 11.

The present invention relates to a laundry treating machine, in particular a laundry dryer, with an asynchronous motor and a control unit for controlling said an asynchronous motor, wherein:
- the asynchronous motor includes a main coil and an auxiliary coil,
- the control unit includes a first capacitor permanently interconnected between the main coil and the auxiliary coil,
- the control unit includes a switchable second capacitor interconnected between the main coil and the auxiliary coil, and
- the control unit is operated, i.e. programmed, to control the ON and/or OFF state of the switch on the basis of a first parameter of the asynchronous motor selected among the voltage, current, phase or rotation speed of said asynchronous motor.

For example, the control unit includes a switch connected in series to the second capacitor, wherein said series is connected in parallel to the first capacitor.

Alternatively, the control unit includes a switch connected in parallel to the second capacitor, wherein said parallel elements are connected in series to the first capacitor.

The control unit may be operated, i.e. programmed, to control the ON and/or OFF state of the switch further on the basis of a second parameter of the asynchronous motor, wherein the second parameter is different from the first parameter and is selected among the voltage, current, phase or rotation speed of said asynchronous motor or a further parameter depending thereof.

For example, the further parameter depending on the voltage, current, phase or rotation speed of the asynchronous motor is the power absorbed or the torque supplied by said asynchronous motor.

The laundry treating machine according to the present invention comprises a rotatable drum for receiving laundry to be treated and an air stream fan; the asynchronous motor is provided for driving the drum and/or the air stream fan and the control unit is operated, i.e. programmed, to switch OFF the switch if a further condition is fulfilled, wherein said further condition relates to at least a third parameter selected among the humidity of laundry, the temperature of drying air or the temperature of a refrigerant in a heat pump system.

The novel and inventive features believed to be the characteristics of the present invention are set forth in the appended claims.

The invention will be described in further detail with reference to the drawings, in which
- FIG 1: illustrates a schematic circuit diagram of an asynchronous motor with a control unit according to a first embodiment of the present invention,
- FIG 2: illustrates two schematic diagrams representing an efficiency of the asynchronous motor as function of a torque according to the first embodiment of the present invention,
- FIG 3: illustrates a schematic circuit diagram of the asynchronous motor with the control unit according to a second embodiment of the present invention, and
- FIG 4: illustrates a schematic diagram representing a voltage of the asynchronous motor as function of the time according to an example of the present invention.

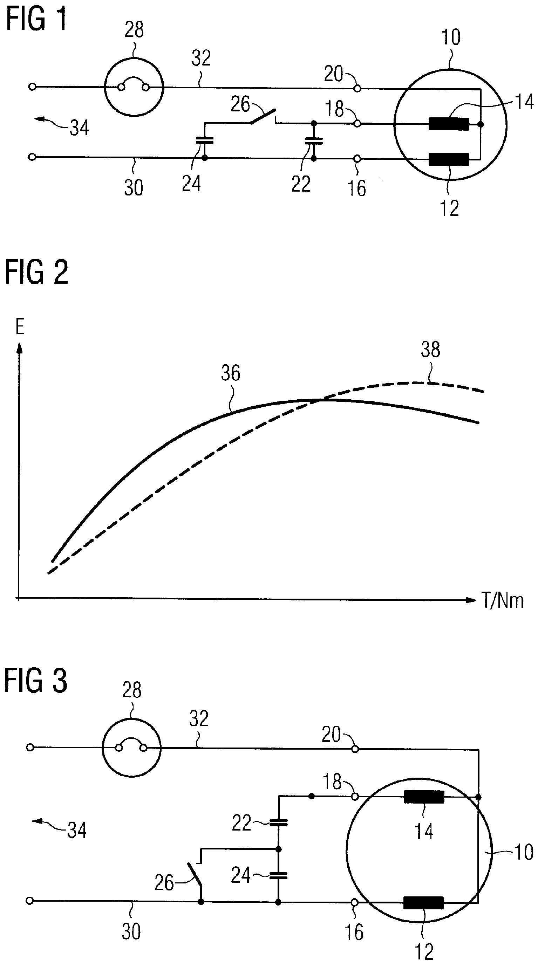

FIG 1 illustrates a schematic circuit diagram of an asynchronous motor 10 with a control unit according to a first embodiment of the present invention. The asynchronous motor 10 includes a main coil 12 and an auxiliary coil 14.

Further, the asynchronous motor 10 comprises a first terminal 16, a second terminal 18 and a third terminal 20. The first terminal 16 is connected to a first end of the main coil 12. The second terminal 18 is connected to a first end of the auxiliary coil 14. The third terminal 20 is connected to second ends of the main coil 12 and auxiliary coil 14. Thus, the second end of the main coil 12 is connected to the second end of the auxiliary coil 14.

The control unit includes a first capacitor 22, a second capacitor 24, a switch 26 and, preferably, an overload protector 28. Further, the control unit comprises a first power supply line 30 and a second power supply line 32. The first power supply line 30 and the second power supply line 32 are connected or connectable to a power source 34.

The first power supply line 30 is connected to a first contact of the first capacitor 22 and to a first contact of the second capacitor 24. The switch 26 is interconnected between a second contact of the first capacitor 22 and a second contact of the second capacitor 24. Thus, the first capacitor 22 and the second capacitor 24 are parallel connected, when the switch 26 is on, i.e. closed. Further, the second contact of the first capacitor 22 is connected to the second terminal 18 of the asynchronous motor 10.

The second power supply line 32 is connected to a first contact of the overload protector 28. A second contact of the overload protector 28 is connected to the third terminal 20 of the asynchronous motor 10.

If the switch 26 is off, i.e. opened, then the auxiliary coil 14 is connected in series to the first capacitor 22. If the switch 26 is on, i.e. closed, then the auxiliary coil 14 is connected in series to the parallel capacitors 22 and 24. The on-state of the switch 26 cause a higher capacity between the first power supply line 30 and the auxiliary coil 14 than the off-state of the switch 26.

The capacities between the first power supply line 30 and the auxiliary coil 14 cause a phase shift between the main coil 12 and the auxiliary coil 14. The phase shift impacts the behaviour of the efficiency of the asynchronous motor 10.

The asynchronous motor 10 is provided for driving a laundry drum and/or an air stream fan of a laundry dryer.

FIG 2 illustrates two schematic diagrams 36 and 38 representing the efficiency E of the asynchronous motor 10 as function of a torque of said asynchronous motor 10 according to the first embodiment of the present invention. The efficiency E represents the ratio of supplied power to absorbed power.

The diagram 36 represents the efficiency of the asynchronous motor 10, if the switch 26 is off. In this case, with reference to FIG 1, only the first capacitor 22 is connected in series with the auxiliary coil 14. Said series is parallel connected to the main coil 12. In this state the maximum efficiency of the asynchronous motor 10 is in the medium range of the torque spectrum.

The diagram 38 represents the efficiency of the asynchronous motor 10, if the switch 26 is on. In this case, with reference to FIG 1, the first capacitor 22 and the second capacitor 24 are connected in parallel. Further, the parallel capacitors 22 and 24 are connected in series with the auxiliary coil 14. Said series is connected in parallel to the main coil 12 again. In this state the maximum efficiency of the asynchronous motor 10 is in the upper range of the torque spectrum.

FIG 3 illustrates a schematic circuit diagram of the asynchronous motor 10 with the control unit according to a second embodiment of the present invention.

The asynchronous motor 10 includes the main coil 12 and the auxiliary coil 14 as well as the first terminal 16, the second terminal 18 and the third terminal 20. The first terminal 16 is connected to the first end of the main coil 12. The second terminal 18 is connected to the first end of the auxiliary coil 14. The third terminal 20 is connected to second ends of the main coil 12 and auxiliary coil 14. The control unit for the electric motor 10 includes, preferably, an overload protector 28 interconnected between the second power supply line 32 of the power source 34 and the third terminal 20. Thus, the main coil 12, the auxiliary coil 14 and the overload protector 28 are connected to the terminals 16, 18 and 20 in the same way as in FIG 1.

The control unit of the second embodiment differs in the first capacitor 22, the second capacitor 24 and the switch 26 from the embodiment in FIG 1. The first capacitor 22 and the second capacitor 24 are connected in series between the first terminal 16 and the second terminal 18. The switch 26 is connected in parallel to the second capacitor 24. When the switch 26 is open, i.e. OFF, then the series of the first capacitor 22 and the second capacitor 24 are connected between the first terminal 16 and the second terminal 18. When the switch 26 is closed, i.e. ON, then only the first capacitor 22 is connected between the first terminal 16 and the second terminal 18.

If the switch 26 is open, then the asynchronous motor 10 works according to the diagram 36 in FIG 2, since the resulting capacity is determined by the series of the both capacitors 22 and 24. If the switch 26 is closed, then the asynchronous motor 10 works according to the diagram 38 in FIG 2, since the second capacitor 24 is bypassed and the resulting capacity increases. The values of the first capacitor 22 and the second capacitor 24 are selected in such a way, that the behaviour of the asynchronous motor 10 corresponds with FIG 2.

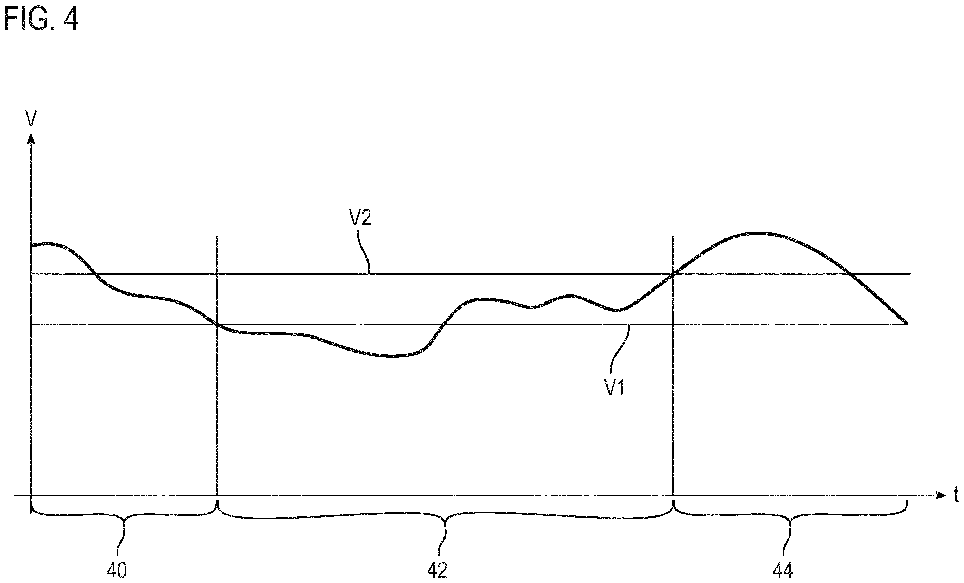

FIG 4 illustrates a schematic diagram representing a voltage V of the asynchronous motor 10 as function of the time t according to an example of the present invention.

The time axis is subdivided into three sections, namely a normal motor functionality 40, a boost motor functionality 42 and a further normal motor functionality 44 again. In this example, the asynchronous motor 10 starts in the normal motor functionality 40. The normal motor functionality 40 and 44 corresponds with an OFF, i.e. opened, state of the switch 26. The efficiency of the asynchronous motor 10 during normal functionality is shown by diagram 36 in FIG 2. On the contrary, the boost motor functionality 44 corresponds with an ON, i.e. closed, state of the switch 26. The efficiency of the asynchronous motor 10 during boost functionality is shown by diagram 38 in FIG 2.

A lower threshold value V1 and an upper threshold value V2 are defined for the asynchronous motor 10. If the voltage V of the asynchronous motor 10 falls below the lower threshold value V1, then the asynchronous motor 10 reduces its rotational speed and may stall. In order to avoid this situation, as the voltage V falls below the lower threshold value V1 the boost motor functionality 42 is activated by switching ON, i.e. by closing, switch 26 of Figs 1 and 3. The efficiency of the motor 10 passes from diagram 36 to diagram 38 of FIG 2 and motor rotational speed reduction and its stalling condition can be avoided. The state of boost motor functionality 42 is maintained, until the voltage V of the asynchronous motor 10 exceeds the upper threshold value V2. After the upper threshold value V2 has been exceeded, the asynchronous motor 10 can be returned to its normal functionality 44 again by switching OFF, i.e. by opening, switch 26 of Figs 1 and 3.

Even if the control of the asynchronous motor 10 has been described above by monitoring the voltage V supplied to the motor 10 to determine the states of the switch 26, in general, the states of the switch 26 may depend on one or more physical parameters of the asynchronous motor 10. For example, the switch 26 is controlled on the basis of a first parameter selected among the voltage V, the current, the phase or the rotation speed of the asynchronous motor 10.

Operating the switch 26 on the basis of a first parameter as indicated above allows a prompt intervention of the control unit to boost the motor 10 when out-of-normal working operation of the motor is detected. However, in view of further reducing the laundry treating machine power consumption, the activation and/or deactivation of the boost motor functionality, i.e. the activation and/or deactivation of the switch 26, may be made dependent not only on the first parameter cited above but also on a second parameter, different from the first parameter, and selected among the voltage V, the current, the phase, the rotation speed of the asynchronous motor 10 or another parameter depended thereof. For example, said other parameter may by the power absorbed by the asynchronous motor 10 or the torque supplied by the asynchronous motor 10.
In this way, the activation and/or deactivation of the boost motor functionality is driven by a pre-set condition on the first parameter and a further pre-set condition on the second parameter. Thanks to this double-parameter control, it is possible to have a more precise detection of the motor 10 operating conditions discriminating, for example, between a situation in which an out-of-normal working operation of the motor 10 is detected but it can be tolerated and, on the contrary, a situation in which the motor 10 is recognised as being in an out-of-normal working operation and its stall is highly probable and therefore inacceptable.

As an example, the first parameter to be monitored during the laundry treating machine working operation, may be the voltage V supplied to the motor 10 and the second parameter to be monitored may be the rotational speed of the motor 10. By a pre-set condition on the voltage V it may be recognised whether the motor 10 is operating in a normal motor functionality or not. In case the motor 10 is recognised to be in an out-of-normal working operation, by a further condition on the rotational speed of the motor 10 it can be checked whether the motor stall is highly probable or whether the decrement of motor 10 rotational speed can be tolerated. In this way, the activation and/or deactivation of the switch 26, i.e. activation and/or deactivation of the boost motor functionality, is operated more precisely with a general decrement of the overall energy consumption of the laundry treating machine.

The condition on either the first or the second parameter for determining the states of the switch 26 may be a predetermined threshold value or a predetermined delta of a threshold value, i.e. a range including the nominal threshold value that is defined for the monitored parameter (Hysteresis-type control). The threshold value or delta relates to one or more parameters above. Thus, a threshold value or delta for the voltage V, current, phase, rotation speed, power and/or torque of the asynchronous motor 10 may be defined. In addition each threshold or delta may be defined in the more appropriate way for each of the parameter above.

In order to avoid a high number of switching ON and OFF operations of the switch 26, the control unit may be arranged such that the appropriate state of the switch 26 is activated when the predetermined condition on the monitored first and/or second parameter occurs for a predetermined time interval. For example, referring to FIG 4, a condition like V < V1, wherein V is the monitored parameter and V1 is a threshold value, may be arranged to be considered verified whether the monitored parameter V is detected to be lower than V1 for a predetermined time interval, like 1 to 3 seconds, for example.
Alternatively, the control unit may be arranged such that the appropriate state of the switch 26 is activated when the predetermined condition on the monitored first and/or second parameter occurs for a predetermined number of times.

Moreover, the disconnecting, i.e. the switching OFF of the switch 26, may be confirmed by a predetermined additional condition related to the process of the laundry treating machine. Said additional condition may be a parameter like the humidity of the laundry inside the laundry drum, the humidity of the laundry drying air, the temperature of the laundry drying air, the temperature of a refrigerant circulating in the heat pump system. The additional condition may vary during different steps of the same laundry treatment cycle. In particular, the additional condition is advantageous, if the asynchronous motor 10 drives the laundry drum and/or the air stream fan. While the switching OFF of the switch 26 may be confirmed by a predetermined additional condition related to the process of the laundry treating machine, the switching ON of the switch 26 remains operated depending on the above described first parameter and optionally also on the second parameter.

The control unit is only a simple circuit containing the first capacitor 22, the second capacitor 24 and the switch 26. Thus, the control unit allows an optimizing of the efficiency of the asynchronous motor 10 by low complexity.

A permanent connection, i.e. an ON state, of the switch 26 would provide some disadvantages like increased energy consumption, an overheating of the asynchronous motor 10, a motor noisy or a drop of the motor efficiency.

Although illustrative embodiments of the present invention have been described herein with reference to the accompanying drawings, it is to be understood that the present invention is not limited to those precise embodiments, and that various other changes and modifications may be affected therein by one skilled in the art without departing from the scope of the invention as claimed. All such changes and modifications are intended to be included within the scope of the invention as defined by the appended claims.

### List of reference numerals

- 10: asynchronous motor
- 12: main coil
- 14: auxiliary coil
- 16: first terminal
- 18: second terminal
- 20: third terminal
- 22: first capacitor
- 24: second capacitor
- 26: switch
- 28: overload protector
- 30: first power supply line
- 32: second power supply line
- 34: power source
- 36: diagram
- 38: diagram
- 40: normal motor functionality
- 42: boost motor functionality
- 44: normal motor functionality

- E: efficiency
- T: torque
- V: voltage
- V1: lower threshold value
- V2: upper threshold value
- t: time

## Claims

1. A method for controlling an asynchronous motor (10) of a laundry treating machine, said asynchronous motor (10) driving a drum and/or an air stream fan of said laundry treating machine and including a main coil (12) and an auxiliary coil (14) permanently interconnected via a first capacitor (22) and switchably interconnected via a second capacitor (24) by means of a switch (26), whereby the method comprises the steps of:
- detecting a first parameter of the asynchronous motor (10), wherein the first parameter is selected among the voltage (V), current, phase or rotation speed of said asynchronous motor (10), and
- controlling the ON and/or OFF state of the switch (26) on the basis of the first parameter of the asynchronous motor (10).

2. The method according to claim 1,
**characterized in, that**
the control of the ON and/or OFF state of the switch (26) further depends on a second parameter of the asynchronous motor (10), wherein the second parameter is different from the first parameter and is selected among the voltage (V), current, phase or rotation speed of said asynchronous motor (10) or a further parameter depending thereof.

3. The method according to claim 2,
**characterized in, that**
the further parameter depending on the voltage (V), current, phase or rotation speed of the asynchronous motor (10) is the power absorbed or the torque (T) supplied by said asynchronous motor (10).

4. The method according to any one of the claims 1 to 3,
**characterized in, that**
a predetermined lower threshold value (V1) and a predetermined upper threshold value (V2) are defined for controlling the ON and/or OFF state of the switch (26).

5. The method according to claim 4,
**characterized in, that**
the switch (26) is switched ON, if the first and/or the second parameter of the asynchronous motor (10) fall below the lower threshold value (V1).

6. The method according to claim 4 or 5,
**characterized in, that**
the switch (26) is switched OFF, if the first and/or the second parameter of the asynchronous motor (10) exceed the upper threshold value (V2).

7. The method according to any one of the claims 4 to 6,
**characterized in, that**
a predetermined time interval is defined, so that the switch (26) is switched ON, after the first and/or the second parameter of the asynchronous motor (10) have remained permanently below the lower threshold value (V1) during said time interval.

8. The method according to any one of the claims 4 to 7,
**characterized in, that**
a further predetermined time interval is defined, so that the switch (26) is switched OFF, after the first and/or the second parameter of the asynchronous motor (10) have remained permanently above the upper threshold value (V2) during said time interval.

9. The method according to any one of the claims 4 to 6,
**characterized in, that** the state of the switch (26) is changed if a predetermined condition of the first and/or second parameter occurs for a predetermined number of times.

10. The method according to any one of the preceding claims,
**characterized in, that**
the switch (26) is switched OFF, if a further condition is fulfilled, wherein said further condition relates to at least a third parameter selected among the humidity of laundry, the temperature of drying air or the temperature of a refrigerant in a heat pump system.

11. A laundry treating machine, in particular a laundry dryer, comprising a rotatable drum for receiving laundry to be treated, an air stream fan, an asynchronous motor (10) driving the drum and/or the air stream fan and a control unit for controlling said asynchronous motor (10), wherein:
- the asynchronous motor (10) includes a main coil (12) and an auxiliary coil (14),
- the control unit includes a first capacitor (22) permanently interconnected between the main coil (12) and the auxiliary coil (14),
- the control unit includes a switchable second capacitor (24) interconnected between the main coil (12) and the auxiliary coil (14) through a switch (26), whereby the control unit is operated to control the ON and/or OFF state of the switch (26) on the basis of a first parameter of the asynchronous motor (10) selected among the voltage (V), current, phase or rotation speed of said asynchronous motor (10).

12. The laundry treating machine according to claim 11,
**characterized in, that**
the control unit is operated to control the ON and/or OFF state of the switch (26) further on the basis of a second parameter of the asynchronous motor (10), wherein the second parameter is different from the first parameter and is selected among the voltage (V), current, phase or rotation speed of said asynchronous motor (10) or a further parameter depending thereof.

13. The laundry treating machine according to claim 12,
**characterized in, that**
the further parameter depending on the voltage (V), current, phase or rotation speed of the asynchronous motor (10) is the power absorbed or the torque (T) supplied by said asynchronous motor (10).

14. The laundry treating machine according to any one of the claims 11 to 13 **characterized in, that**
the control unit is operated to switch OFF the switch (26) if a further condition is fulfilled, wherein said further condition relates to at least a third parameter selected among the humidity of laundry, the temperature of drying air or the temperature of a refrigerant in a heat pump system.

## Patentansprüche

1. Verfahren zum Steuern eines Asynchronmotors (10) einer Wäschebehandlungsmaschine, wobei der Asynchronmotor (10) eine Trommel und/oder ein Luftströmungsgebeläse der Wäschebehandlungsmaschine antreibt und eine Hauptspule (12) und eine zusätzliche Spule (14) umfasst, die über einen ersten Kondensator (22) permanent verbunden sind und mittels eines Schalters (26) über einen zweiten Kondensator (24) schaltbar verbunden sind, wobei das Verfahren die folgenden Schritte umfasst:
- Detektieren eines ersten Parameters des Asynchronmotors (10), wobei der erste Parameter aus der Spannung (V), dem Strom, der Phase oder der Drehzahl des Asynchronmotors (10) ausgewählt wird, und
- Steuern des EIN- und/oder AUS-Zustands des Schalters (26) auf der Basis des ersten Parameters des Asynchronmotors (10).

2. Verfahren nach Anspruch 1, **dadurch gekennzeichnet, dass**
das Steuern des EIN- und/oder AUS-Zustands des Schalters (26) ferner von einem zweiten Parameter des Asynchronmotors (10) abhängt, wobei sich der zweite Parameter von dem ersten Parameter unterscheidet und aus der Spannung (V), dem Strom, der Phase oder der Drehzahl des Asynchronmotors (10) oder einem weiteren Parameter, der davon abhängt, ausgewählt wird.

3. Verfahren nach Anspruch 2, **dadurch gekennzeichnet, dass**
der weitere Parameter, der von der Spannung (V), dem Strom, der Phase oder der Drehzahl des Asynchronmotors (10) abhängt, die aufgenommene Leistung oder das Drehmoment (T) ist, das durch den Asynchronmotor (10) zugeführt wird.

4. Verfahren nach einem der Ansprüche 1 bis 3, **dadurch gekennzeichnet, dass**
ein festgelegter unterer Schwellenwert (V1) und ein festgelegter oberer Schwellenwert (V2) zum Steuern des EIN- und/oder AUS-Zustands des Schalters (26) definiert sind.

5. Verfahren nach Anspruch 4, **dadurch gekennzeichnet, dass**
der Schalter (26) EIN geschaltet wird, falls der erste und/oder der zweite Parameter des Asynchronmotors (10) unter den unteren Schwellenwert (V1) fallen.

6. Verfahren nach Anspruch 4 oder 5, **dadurch gekennzeichnet, dass**
der Schalter (26) AUS geschaltet wird, falls der erste und/oder der zweite Parameter des Asynchronmotors (10) den oberen Schwellenwert (V2) überschreiten.

7. Verfahren nach einem der Ansprüche 4 bis 6, **dadurch gekennzeichnet, dass**
eine festgelegte Zeitspanne so definiert ist, dass der Schalter (26) EIN geschaltet wird, wenn der erste und/oder der zweite Parameter des Asynchronmotors (10) während der Zeitspanne permanent unter dem unteren Schwellenwert (V1) gelegen sind.

8. Verfahren nach einem der Ansprüche 4 bis 7, **dadurch gekennzeichnet, dass**
eine weitere festgelegte Zeitspanne so definiert ist, dass der Schalter (26) AUS geschaltet wird, wenn der erste und/oder der zweite Parameter des Asynchronmotors (10) während der Zeitspanne permanent über dem oberen Schwellenwert (V2) gelegen sind.

9. Verfahren nach einem der Ansprüche 4 bis 6, **dadurch gekennzeichnet, dass**
der Zustand des Schalters (26) geändert wird, falls eine festgelegte Bedingung des ersten und/oder des zweiten Parameters mit einer festgelegten Häufigkeit eintritt.

10. Verfahren nach einem der vorhergehenden Ansprüche, **dadurch gekennzeichnet, dass**
der Schalter (26) AUS geschaltet wird, falls eine weitere Bedingung erfüllt wird, wobei sich die weitere Bedingung auf wenigstens einen dritten Parameter bezieht, der aus der Feuchtigkeit der Wäsche, der Temperatur der Trocknungsluft oder der Temperatur eines Kühlmittels in einem Wärmepumpensystem ausgewählt wird.

11. Wäschebehandlungsmaschine, insbesondere Wäschetrockner, der eine drehbare Trommel zum Aufnehmen von zu behandelnder Wäsche, ein Luftströmungsgebläse, einen Asynchronmotor (10), der die Trommel und/oder das Luftströmungsgebläse antreibt, und eine Steuereinheit zum Steuern des Asynchronmotors (10) umfasst, wobei:
- der Asynchronmotor (10) eine Hauptspule (12) und eine zusätzliche Spule (14) umfasst,
- die Steuereinheit einen ersten Kondensator (22) umfasst, der permanent mit der Hauptspule (12) und der zusätzlichen Spule (14) verbunden ist,
- die Steuereinheit einen schaltbaren zweiten Kondensator (24) umfasst, der über einen Schalter (26) mit der Hauptspule (12) und der zusätzlichen Spule (14) verbunden ist, wobei
die Steuereinheit betrieben wird, um den EIN- und/oder AUS-Zustand des Schalters (26) auf der Basis eines ersten Parameters des Asynchronmotors (10), der aus der Spannung (V), dem Strom, der Phase oder der Drehzahl des Asynchronmotors (10) ausgewählt wird, zu steuern.

12. Wäschebehandlungsmaschine nach Anspruch 11, **dadurch gekennzeichnet, dass**
die Steuereinheit betrieben wird, um den EIN- und/oder AUS-Zustand des Schalters (26) ferner auf der Basis eines zweiten Parameters des Asynchronmotors (10) zu steuern, wobei sich der zweite Parameter von dem ersten Parameter unterscheidet und aus der Spannung (V), dem Strom, der Phase oder der Drehzahl des Asynchronmotors (10) oder einem weiteren Parameter, der davon abhängt, ausgewählt wird.

13. Wäschebehandlungsmaschine nach Anspruch 12, **dadurch gekennzeichnet, dass**
der weitere Parameter, der von der Spannung (V), dem Strom, der Phase oder der Drehzahl des Asynchronmotors (10) abhängt, die aufgenommene Leistung oder das Drehmoment (T) ist, das durch den Asynchronmotor (10) zugeführt wird.

14. Wäschebehandlungsmaschine nach einem der Ansprüche 11 bis 13, **dadurch gekennzeichnet, dass** die Steuereinheit betrieben wird, um den Schalter (26) AUS zu schalten, falls eine weitere Bedingung erfüllt wird, wobei sich die weitere Bedingung auf wenigstens einen dritten Parameter bezieht, der aus der Feuchtigkeit der Wäsche, der Temperatur der Trocknungsluft oder der Temperatur eines Kühlmittels in einem Wärmepumpensystem ausgewählt wird.

## Revendications

1. Procédé permettant de commander un moteur asynchrone (10) d'une machine de traitement de linge, ledit moteur asynchrone (10) entraînant un tambour et/ou un ventilateur de flux d'air de ladite machine de traitement de linge, et comprenant une bobine principale (12) et une bobine auxiliaire (14) interconnectées de manière permanente par l'intermédiaire d'un premier condensateur (22) et interconnectées de manière commutable par l'intermédiaire d'un deuxième condensateur (24) au moyen d'un commutateur (26), le procédé comprenant les étapes consistant à :
- détecter un premier paramètre du moteur asynchrone (10), le premier paramètre étant sélectionné parmi la tension (V), le courant, la phase et la vitesse de rotation dudit moteur asynchrone (10), et
- commander l'état sous et/ou hors tension du commutateur (26) sur la base du premier paramètre du moteur asynchrone (10).

2. Procédé selon la revendication 1, **caractérisé en ce que** la commande de l'état sous et/ou hors tension du commutateur (26) dépend en outre d'un deuxième paramètre du moteur asynchrone (10), le deuxième paramètre étant différent du premier paramètre et étant sélectionné parmi la tension (V), le courant, la phase et la vitesse de rotation dudit moteur asynchrone (10) ou un paramètre supplémentaire qui en dépend.

3. Procédé selon la revendication 2, **caractérisé en ce que** le paramètre supplémentaire qui dépend de la tension (V), du courant, de la phase ou de la vitesse de rotation du moteur asynchrone (10) est la puissance absorbée ou le couple (T) fourni par ledit moteur asynchrone (10).

4. Procédé selon l'une quelconque des revendications 1 à 3, **caractérisé en ce qu'**une valeur de seuil inférieur prédéterminée (V1) et une valeur de seuil supérieur prédéterminée (V2) sont définies pour commander l'état sous et/ou hors tension du commutateur (26).

5. Procédé selon la revendication 4, **caractérisé en ce que** le commutateur (26) est activé si le premier et/ou le deuxième paramètre du moteur asynchrone (10) descendent au-dessous de la valeur de seuil inférieur (V1).

6. Procédé selon la revendication 4 ou 5, **caractérisé en ce que** le commutateur (26) est désactivé, si le premier et/ou le deuxième paramètre du moteur asynchrone (10) dépassent la valeur de seuil supérieur (V2).

7. Procédé selon l'une quelconque des revendications 4 à 6, **caractérisé en ce qu'**un intervalle de temps prédéterminé est défini, de sorte que le commutateur (26) est activé après que le premier et/ou le deuxième paramètre du moteur asynchrone (10) sont restés de manière permanente sous la valeur de seuil inférieur (V1) pendant ledit intervalle de temps.

8. Procédé selon l'une quelconque des revendications 4 à 7, **caractérisé en ce qu'**un intervalle de temps prédéterminé supplémentaire est défini, de sorte que le commutateur (26) est désactivé après que le premier et/ou le deuxième paramètre du moteur asynchrone (10) sont restés de manière permanente au-dessus de la valeur de seuil supérieur (V2) pendant ledit intervalle de temps.

9. Procédé selon l'une quelconque des revendications 4 à 6, **caractérisé en ce que** l'état du commutateur (26) est modifié si une condition prédéterminée du premier et/ou du deuxième paramètre survient un nombre de fois prédéterminé.

10. Procédé selon l'une quelconque des revendications précédentes, **caractérisé en ce que** le commutateur (26) est désactivé si une condition supplémentaire est satisfaite, ladite condition supplémentaire concernant au moins un troisième paramètre sélectionné parmi l'humidité du linge, la température de l'air de séchage et la température d'un fluide frigorigène dans un système de pompe à chaleur.

11. Machine de traitement de linge, en particulier sèche-linge, comprenant un tambour rotatif destiné à recevoir du linge à traiter, un ventilateur de flux d'air, un moteur asynchrone (10) entraînant le tambour et/ou le ventilateur de flux d'air et une unité de commande pour commander ledit moteur asynchrone (10), dans laquelle :
- le moteur asynchrone (10) comprend une bobine principale (12) et une bobine auxiliaire (14),
- l'unité de commande comprend un premier condensateur (22) interconnecté de manière permanente entre la bobine principale (12) et la bobine auxiliaire (14),
- l'unité de commande comprend un deuxième condensateur commutable (24) interconnecté entre la bobine principale (12) et la bobine auxiliaire (14) par un commutateur (26), l'unité de commande étant actionnée pour commander l'état sous et/ou hors tension du commutateur (26) sur la base d'un premier paramètre du moteur asynchrone (10) sélectionné parmi la tension (V), le courant, la phase et la vitesse de rotation dudit moteur asynchrone (10).

12. Machine de traitement de linge selon la revendication 11, **caractérisée en ce que** l'unité de commande est actionnée pour commander l'état sous et/ou hors tension du commutateur (26) en outre sur la base d'un deuxième paramètre du moteur asynchrone (10), le deuxième paramètre étant différent du premier paramètre et étant sélectionné parmi la tension (V), le courant, la phase et la vitesse de rotation dudit moteur asynchrone (10) ou un paramètre supplémentaire qui en dépend.

13. Machine de traitement de linge selon la revendication 12, **caractérisée en ce que** le paramètre supplémentaire qui dépend de la tension (V), du courant, de la phase ou de la vitesse de rotation du moteur asynchrone (10) est la puissance absorbée ou le couple (T) fourni par ledit moteur asynchrone (10).

14. Machine de traitement de linge selon l'une quelconque des revendications 11 à 13, **caractérisée en ce que** l'unité de commande est actionnée pour désactiver le commutateur (26) si une condition supplémentaire est satisfaite, ladite condition supplémentaire concernant au moins un troisième paramètre sélectionné parmi l'humidité du linge, la température de l'air de séchage et la température d'un fluide frigorigène dans un système de pompe à chaleur.
